# EUROPÄISCHE PATENTSCHRIFT

(11) **EP 2 876 041 B1**
(45) Veröffentlichungstag und Bekanntmachung des Hinweises auf die Patenterteilung: **06.12.2017**
(21) Anmeldenummer: 14198130.8
(22) Anmeldetag: 21.10.2010
(51) Int. Cl.: B63H 25/00, B63H 25/04, G01L 5/22, B63H 21/21

(54) **Anordnung zur Ermittlung einer auf ein Ruder wirkenden Kraft**
Assembly for calculating a force affecting a rudder
Agencement de détermination d'une force agissant sur un gouvernail

(30) Priorität: 06.11.2009 DE 102009053201; 21.01.2010 DE 102010001102
(43) Veröffentlichungstag der Anmeldung: 27.05.2015
(62) Teilanmeldung aus: 10188443.5
(73) Patentinhaber: Becker Marine Systems GmbH, 21079 Hamburg (DE)
(72) Erfinder: Lehmann, Dirk, 21423 Winsen / Luhe (DE)
(74) Vertreter: RGTH

(56) Entgegenhaltungen:
- WO-A1-2006/058232
- WO-A1-2007/016805
- DE-A1- 2 342 287
- US-A1- 2003 150 366
- US-A1- 2007 244 639
- US-B1- 6 371 038
- US-B1- 7 281 482

## Beschreibung

Die Erfindung betrifft ein dynamisches Positioniersystem zur automatischen Positionierung eines Wasserfahrzeugs, ein Autopilotsystem zur automatischen Kurssteuerung eines Wasserfahrzeugs sowie ein Verfahren zur dynamischen Positionierung und/oder zur automatischen Kurssteuerung eines Wasserfahrzeugs.

Es ist grundsätzlich bekannt, dass im maritimen Bereich viele Wasserfahrzeuge über Autopilotsysteme verfügen. Dies sind automatische Steuerungsanlagen, die häufig softwarebasierend und computerimplementiert ausgebildet sind und die die Wasserfahrzeuge während der Fahrt auf einem vorgegebenen Kurs halten. Derartige Autopilotsysteme verfügen normalerweise über Standpunkt-Referenz-Sensoren oder andersartige Positionsermittlungseinrichtungen, wie beispielsweise GPS-Empfänger, Kreiselkompasse, o. dgl. Darüber hinaus können dem Autopilotsystem andere Parameter zur Verfügung gestellt werden, die beispielsweise von lokalen Messeinrichtungen am Wasserfahrzeug ermittelt und weitergeleitet werden. Unter dem Begriff "Wasserfahrzeug" ist im vorliegenden Zusammenhang jedwedes Fahrzeug zu verstehen, das zur Fortbewegung auf dem oder im Wasser bestimmt ist (z. B. Schiffe, mobile Bohrinseln, etc.). Die Autopilotsysteme umfassen normalerweise ferner eine Steuereinrichtung, die zum Ansteuern der Manövrieranlage eines Wasserfahrzeuges ausgebildet ist. Manövrieranlagen, insbesondere bei Schiffen, können insbesondere eine Kombination aus einer Antriebseinheit, beispielsweise einem Schiffspropeller, und einer Steuereinheit, beispielsweise einer Ruderanlage mit einem verstellbaren Ruder, umfassen. Bei solchen Manövrieranlagen sind die Autopilotsysteme häufig insbesondere zur Ansteuerung bzw. Verstellung des Ruders ausgebildet und können somit den tatsächlichen Kurs des Wasserfahrzeuges auf Basis der dem Autopilotsystem zugeführten Parameter und der vorgegebenen Algorithmen berechnen.

Ferner sind aus dem Stand der Technik Dynamische Positioniersysteme für Wasserfahrzeuge bekannt. Diese sind im Allgemeinen computergesteuerte Systeme zur automatischen Positionierung von Wasserfahrzeugen, insbesondere Schiffen. Dynamisches Positionieren kann entweder absolut erfolgen - d. h., dass das Wasserfahrzeug an einen festen Punkt über dem Boden gehalten wird - oder relativ zu einem bewegten Objekt wie einem Schiff oder einem Unterwasserfahrzeug. Derartige dynamische Positionierungen werden beispielsweise häufig in der Offshore-Öl-Industrie für Bohrplattformen oder andere Offshore-Wasserfahrzeuge verwendet. Allerdings werden mittlerweile auch vermehrt Schiffe, beispielsweise Kreuzfahrtschiffe, mit Dynamischen Positioniersystemen ausgestattet. Diese Systeme können ferner zusätzlich Autopilotfunktionen beinhalten und können damit Wasserfahrzeuge auf einem bestimmten, vorgegebenen Kurs halten. Grundsätzlich können Wasserfahrzeuge auch ein Dynamisches Positioniersystem und zusätzlich ein separates Autopilotsystem aufweisen. Derartige Dynamische Positioniersysteme umfassen u. a. normalerweise Standpunkt-Referenz-Sensoren oder andersartige Positionsermittlungseinrichtungen, wie beispielsweise GPS-Empfänger, Kreiselkompasse, o. dgl. Diese Einrichtungen liefern dem Dynamischen Positioniersystem Wasserfahrzeugpositionsdaten. Andere derartige Einrichtungen können Bewegungsmelder sein, mit denen beispielsweise das Rollen oder Stampfen eines Schiffes festgestellt werden kann. Ebenso wie ein Autopilotsystem umfasst ein Dynamisches Positioniersystem eine Steuerungseinrichtung, die zur Ansteuerung der Manövrieranlage auf Basis der dem Dynamischen Positioniersystem zugeführten Parameter und der darin hinterlegten Algorithmen ausgebildet ist. Die Ansteuerung der Manövrieranlage erfolgt hier im Regelfall dergestalt, dass eine vorgegebene Position gehalten werden soll. Häufig sind Dynamische Positioniersysteme im Falle von Manövrieranlagen, die sowohl eine Ruderanlage als auch eine Antriebseinheit umfassen, in der Lage beide Teilanlagen anzusteuern. Sowohl die dynamischen Positioniersysteme als auch die Autopilotsysteme für Wasserfahrzeuge können unter den Oberbegriff automatische Steuerungssysteme für Wasserfahrzeuge subsumiert werden.

Darüber hinaus umfassen Dynamische Positioniersysteme normalerweise ferner mindestens eine Messeinrichtung zur Ermittlung von Messdaten von physikalischen Größen des Wasserfahrzeuges bzw. von auf das Wasserfahrzeug wirkenden physikalischen Größen. Ebenfalls können Autopilotsysteme derartige Messeinrichtungen umfassen. Hierbei ist es beispielsweise bekannt, mit Hilfe von als Windsensoren ausgebildeten Messeinrichtungen die auf das Schiff wirkende Windstärke zu bestimmen. Alternativ oder zusätzlich ist ferner bekannt den Wellengang mittels geeigneter Windeinrichtungen zu bestimmen. Insofern stellen die mindestens eine Messeinrichtung und die Mittel zur Ermittlung von Wasserfahrzeugpositionsdaten Informationen für eine zentrale Steuereinrichtung, beispielsweise einen Computer, in Bezug auf die Position des Schiffes und das Ausmaß und die Wirkungsrichtung gewisser Umweltkräfte zur Verfügung, die die Lage des Wasserfahrzeuges beeinflussen (können). Basierend auf diesen Parametern sowie auf Informationen über einen gewünschten Kurs berechnet eine Recheneinheit des Dynamischen Positioniersystems und/oder des Autopilotsystems, die integriert in die Steuereinrichtung ausgebildet sein kann, basierend auf einem oder mehreren vorgegebenen Algorithmen die notwendigen Ansteuerungsparameter, auf deren Basis die Steuerungseinrichtung Steuersignale an die Manövrieranlage des Schiffes bzw. des Wasserfahrzeuges weiterleitet und diese dadurch entsprechend beeinflusst. Hierdurch kann der gewünschte Kurs des Wasserfahrzeuges gehalten bzw. die vorgegebene Position erreicht bzw. gehalten werden.

Die Manövrieranlage eines Wasserfahrzeuges kann beispielsweise eine Ruderanlage und eine Antriebseinheit, insbesondere einen Antriebspropeller, umfassen. Die Ruderanlage umfasst wiederum im Allgemeinen ein Ruder und eine Ruderverstelleinrichtung, insbesondere eine Rudermaschine. Durch Ansteuerung der Verstelleinrichtung und der Antriebseinheit kann der Schub und der Ruderwinkel des Wasserfahrzeuges bzw. der Manövrieranlage verändert und somit die Fahrtrichtung und Geschwindigkeit des Wasserfahrzeuges beeinflusst werden.

Aus der US 2007/0244639 A1 ist ein Autopilotsystem bekannt, das an Bord eines Bootes installiert ist. Das Auto Pilotsystem umfasst eine Steuereinrichtung, welche mit einem Bildschirm, einem Kurssensor, einem Ruderwinkelsensor, einem GPS-Sensor und einem Windsensor verbunden ist. Ferner ist die Steuereinrichtung mit einem Motor verbunden, der zur Verstellung des Ruderwinkels verwendet wird.

Aus der DE 23 42 287 A1 ist ein Verfahren zur Ermittlung der Querkraft von tragflügelförmigen Quertriebskörpern, die am Schiff unter Wasser angeordnet sind, bekannt. Hierzu werden an zwei einander gegenüberliegenden Stellen der Oberfläche des Quertriebskörpers mithilfe von elektromagnetischen Strömungs-Messfühlern die örtlichen Wassergeschwindigkeiten gemessen und daraus die Querkraft abgeleitet.

Wird nun von bekannten Autopilotsystemen oder Dynamischen Positioniersystemen zu einem gegebenen Zeitpunkt festgestellt, dass aufgrund der vorliegenden Wasserfahrzeugpositions- und Messdaten der Kurs bzw. die Position des Wasserfahrzeuges verändert werden muss, wird zwar die Manövrieranlage angesteuert und die Antriebsleistung (Schub) und/oder der Ruderwinkel verändert, häufig jedoch nicht in optimaler Höhe. Hierdurch wird der Kurs des Wasserfahrzeuges oft über den gewünschten Kurs hinaus verändert, bzw. die gewünschte Position nicht unmittelbar erreicht, so dass dann wieder gegengesteuert werden muss. In der Praxis kommt es hierdurch zu einem häufigen Ansteuern bzw. Verstellen des Ruderwinkels sowie gegebenenfalls zu einer stetigen Leistungsveränderung des Antriebspropellers innerhalb relativ kurzer Zeitabstände. Dieser Vorgang wird auch als "Schalthysterese" bezeichnet und führt dazu, dass die Manövrieranlage über Gebühr beansprucht wird, bzw. sich der gewünschte Kurs bzw. die gewünschte Position erst verzögert einstellt. Mit anderen Worten kann es zur erhöhten Abnutzung bzw. erhöhtem Verschleiß der Manövrieranlage kommen und dazu führen, dass der vom Schiff eingeschlagene Kurs oft nicht optimal ist. Ferner wird im Falle von Autopilotsystemen durch die häufigen Ruderausschläge die benötigte Vortriebsenergie des Wasserfahrzeuges erhöht.

Daher ist es die Aufgabe der vorliegenden Erfindung, Autopilotsysteme von Wasserfahrzeugen und/oder Dynamische Positioniersysteme derart zu verbessern, dass die Schalthysterese reduziert wird. Die Lösung dieser Aufgabe gelingt mit einem Dynamischen Positioniersystem zur automatischen Positionierung eines Wasserfahrzeuges, insbesondere Schiff, mit einem Ruder, insbesondere Vollschweberuder, einem Verstellmittel, insbesondere einer Rudermaschine, zur Verstellung des Ruders und einer Antriebseinheit, insbesondere ein Antriebspropeller, umfassend eine Steuereinrichtung zur Ansteuerung des Verstellmittels und/oder der Antriebseinheit, Mittel zur Ermittlung von Wasserfahrzeugpositionsdaten, die zur Übermittlung der Wasserfahrzeugpositionsdaten an die Steuereinrichtung ausgebildet sind, und mindestens eine Messeinrichtung zur Ermittlung von Messdaten von auf das Wasserfahrzeug wirkenden physikalischen Größen, wobei die mindestens eine Messeinrichtung zur Übermittlung der ermittelten Messdaten an die Steuereinrichtung ausgebildet ist, wobei die Steuereinrichtung zur Ansteuerung des Verstellmittels und/oder der Antriebseinheit auf Basis der Wasserfahrzeugpositionsdaten und der Messdaten ausgebildet ist, wobei die mindestens eine Messeinrichtung am Ruder angeordnet ist und zur Ermittlung von Rudermessdaten einer auf das Ruder wirkenden physikalischen Größe, insbesondere eine Biegespannung und/oder ein Drehmoment, ausgebildet ist, wobei die Steuereinrichtung zur Ermittlung von auf das Ruder wirkenden Kräften, nämlich der Auftriebskraft und der Widerstandskraft, auf Basis der Rudermessdaten der auf das Ruder wirkenden physikalischen Größe ausgebildet ist, und wobei die Steuereinrichtung zur Berücksichtigung der Rudermessdaten im Hinblick auf die Ansteuerung des Verstellmittels und/oder der Antriebseinheit ausgebildet ist.

Ferner gelingt die Lösung der Aufgabe mit einem Autopilotsystem zur automatischen Kurssteuerung eines Wasserfahrzeuges, insbesondere Schiff, mit einem Ruder, insbesondere Vollschweberuder, und einem Verstellmittel, insbesondere eine Rudermaschine, zur Verstellung des Ruders, umfassend eine Steuereinrichtung zur Ansteuerung des Verstellmittels, Mittel zur Ermittlung von Wasserfahrzeugpositionsdaten, die zur Übermittlung der Wasserfahrzeugpositionsdaten an die Steuereinrichtung ausgebildet sind, und mindestens eine Messeinrichtung zur Ermittlung von Messdaten von auf das Wasserfahrzeug wirkenden physikalischen Größen, wobei die mindestens eine Messeinrichtung zur Übermittlung der ermittelten Messdaten an die Steuereinrichtung ausgebildet ist, wobei die Steuereinrichtung zur Ansteuerung des Verstellmittels auf Basis der Wasserfahrzeugpositionsdaten und der Messdaten ausgebildet ist, wobei die mindestens eine Messeinrichtung am Ruder angeordnet ist und zur Ermittlung von Rudermessdaten einer auf das Ruder wirkenden physikalischen Größe, insbesondere eine Biegespannung und/oder ein Drehmoment, ausgebildet ist, wobei die Steuereinrichtung zur Ermittlung von auf das Ruder wirkenden Kräften, nämlich der Auftriebskraft und der Widerstandskraft, auf Basis der Rudermessdaten der auf das Ruder wirkenden physikalischen Größe ausgebildet ist, und wobei die Steuereinrichtung zur Berücksichtigung der Rudermessdaten im Hinblick auf die Ansteuerung des Verstellmittels ausgebildet ist.

Durch die Messung der Werte einer mit einer auf das Ruder wirkenden Kraft in Zusammenhang stehenden physikalischen Größe kann die auf das Ruder wirkende Kraft jederzeit bestimmt werden. Die Messung der Werte der physikalischen Größe am Ruder wird zweckmäßigerweise mehrfach bzw. in vorgegebenen, sich gegebenenfalls wiederholenden Abständen, durchgeführt. Insbesondere ist es zweckmäßig, die Messungen während des Betriebs, d. h. während der Fahrt des Wasserfahrzeuges bzw. während des Haltens des Wasserfahrzeuges auf einer vorgegebenen Position, fortwährend durchzuführen. Es kann nun eine konkrete Größe des Ruders, nämlich die auf das Ruder wirkende Kraft, bestimmt werden und an ein Dynamisches Positioniersystem bzw. ein Autopilotsystem weitergeleitet werden, die diese Rudergröße zusammen mit den anderen Parametern auf Basis eines vorgegebenen Algorithmus auswerten und hierdurch in der Lage sind, die optimale Größe der Ruderwinkelveränderung bzw. die optimale Höhe der Leistungserhöhung bzw. Erniedrigung besser zu bestimmen, so dass Schalthysterese vermieden bzw. zumindest verringert wird.

Der Begriff "physikalische Größe" kann grundsätzlich jede quantitativ bestimmbare Eigenschaft des Ruders bzw. der Ruderanlage sein. Sie ist entweder direkt mittels der mindestens einen Messeinrichtung messbar (Messgröße) oder kann aus der von der Messeinrichtung gemessenen Messgröße abgeleitet bzw. berechnet werden. Die Berechnung erfolgt zweckmäßigerweise ebenfalls mittels der Steuereinrichtung oder mittels einer separat vorgesehenen, zum jeweiligen System gehörenden Recheneinheit. Allerdings kann die Messeinrichtung auch selbst zur Ermittlung bzw. Berechnung der physikalischen Größe aufgrund der Messgrößen ausgebildet sein. Die Recheneinheit kann beispielsweise ein geeigneter Computer o. dgl. sein und kann gegebenenfalls auch Bestandteil eines Dynamischen Positioniersystems sein. Manchmal werden derartige Größen auch als "physikalisch-technische Größen" oder "technische Größen" bezeichnet. Solche Begriffe sind ebenfalls von der vorliegenden Erfindung umfasst.

Bei beiden Systemen übermitteln Mittel zur Ermittlung von Wasserfahrzeugpositionsdaten diese an die Steuereinrichtung. Ebenso werden die Messdaten der mindestens einen Messeinrichtung an die Steuereinrichtung übermittelt. Die Messdaten können gemessene Werte der physikalischen Größe des Ruders oder auch aufgrund der eigentlich gemessenen Werte der Messeinrichtung ermittelte bzw. berechnete Werte sein. Erfindungsgemäß werden nun erstmals statt der üblichen, aus dem Stand der Technik bekannten Messdaten, Rudermessdaten einer auf das Ruder wirkenden physikalischen Größe verwendet. Diese Rudermessdaten werden ebenfalls an die Steuereinrichtung übermittelt und zur Bestimmung der automatischen Positionierung bzw. automatischen Kurssteuerung des Wasserfahrzeuges mit herangezogen, d.h., insbesondere auf Basis der Rudermessdaten wird von der Steuereinrichtung des Dynamischen Positionier- bzw. Autopilotsystems die Ansteuerung des Verstellmittels und/oder des Antriebspropellers vorgenommen. Somit kann durch die erfindungsgemäßen Systeme ein wesentlich genaueres Ansteuern der Manövrieranlage des Wasserfahrzeuges erfolgen und somit die Schalthysterese deutlich reduziert werden. Bei den erfindungsgemäßen Systemen werden somit erstmals Messdaten, die ausschließlich das Ruder betreffen, zur Positionierung bzw. Steuerung des Wasserfahrzeuges herangezogen.

Die physikalische Größe des Ruders ist vorzugsweise eine Biegespannung und/oder ein Drehmoment. Alternativ zur Biegespannung kann auch das Biegemoment, das auf das Ruder wirkt und die Biegespannung im Ruder verursacht, ermittelt werden. Auf Basis der Biegespannung kann sowohl die Auftriebskraft als auch die Widerstandskraft ohne Weiteres rechnerisch ermittelt werden. Ebenso ist dies auf Basis der auf das Ruder wirkenden Torsionskraft, d. h. des Drehmomentes, möglich. Besonders bevorzugt ist es, sowohl die Biegespannung als auch das Drehmoment zu bestimmen, um eine möglichst hohe Genauigkeit bei der Berechnung der auf das Ruder wirkenden Kräfte zu erhalten. Die Biegespannung kann aufgrund der Art ihrer Einspannung besonders vorteilhaft bei Vollschweberudern ermittelt werden.

Ferner ist die Steuereinrichtung oder gegebenenfalls auch eine separate Recheneinheit zur Ermittlung von auf das Ruder wirkenden Kräften, nämlich der Auftriebskraft und der Widerstandskraft, auf Basis der der ermittelten Werte der physikalischen Größe des Ruders ausgebildet. Die auf das Ruder wirkende Kraft wird dann für die Positionierung bzw. Kurssteuerung und insbesondere für die Ansteuerung der Manövrieranlage des Wasserfahrzeuges herangezogen.

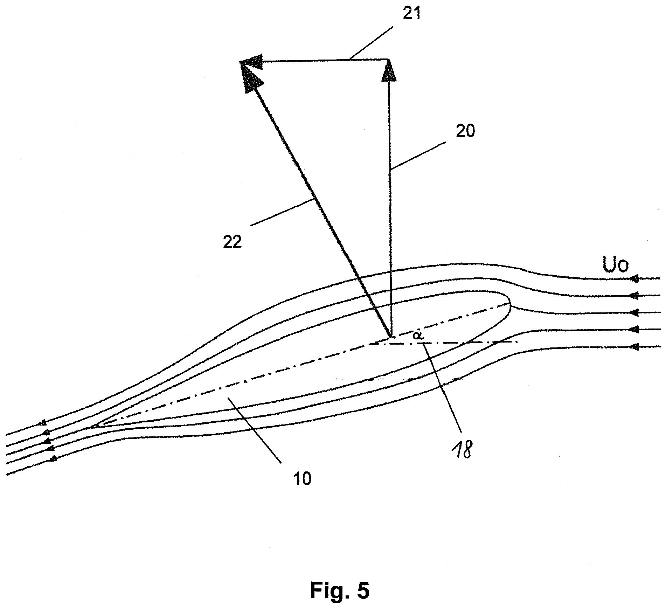

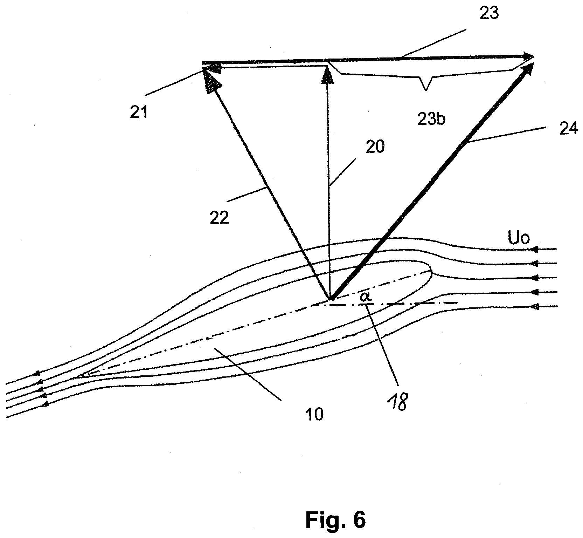

In einer bevorzugten Ausführungsform der Systeme ist eine weitere Messeinrichtung vorgesehen, die zur Ermittlung von Wasserfahrzeugantriebsmessdaten in Bezug auf die Antriebskraft des Wasserfahrzeuges, insbesondere den Schub des Wasserfahrzeuges, ausgebildet ist. Diese ist bevorzugt an der Antriebswelle des Antriebspropellers des Wasserfahrzeuges vorgesehen. Ferner ist die Steuereinrichtung zur Berücksichtigung der Wasserfahrzeugantriebsmessdaten im Hinblick auf die Ansteuerung des Verstellmittels und/oder des Antriebspropellers ausgebildet. Somit werden bei dieser Ausführungsform zusätzlich zu den Rudermessdaten die Wasserfahrzeugantriebsmessdaten bei der Ansteuerung der Manövrieranlage des Wasserfahrzeuges herangezogen, bzw. in den der Ansteuerung zugrundeliegenden Algorithmus mit eingebracht. Dies ist insbesondere deswegen zweckmäßig, weil der Schub des Wasserfahrzeuges genau entgegen der Widerstandskraft des Ruders wirkt bzw. um die Widerstandskraft des Ruders vermindert wird. Insofern ist es bei der zusätzlichen Vorsehung der Wasserfahrzeugantriebsmessdaten möglich, weitergehende Informationen über die Manövrieranlage des Wasserfahrzeuges zu erhalten. Insbesondere kann die Steuereinrichtung auf Basis dieser Daten die Nettomanövrierkraft ("net maneuvering force") ermitteln bzw. berechnen und diese für den Prozess der Ansteuerung der Manövrieranlage mit heranziehen. Der Zusammenhang zwischen diesen einzelnen Kräften wird durch die Darstellung in Fig. 6 verdeutlicht. Diese Darstellung basiert auf der Darstellung von Fig. 5, wobei zusätzlich der dem Widerstand 21 entgegenwirkende Schub 23 als Vektorpfeil eingezeichnet ist. Aus dem Nettoschub 23b (= Schub - Widerstand) und dem Auftrieb 20 kann als resultierende Kraft die Nettomanövrierkraft 24 ermittelt werden. Der in Fig. 5 dargestellte Zusammenhang ist insbesondere bei Dynamischen Positioniersystemen relevant, da diese häufig sowohl zur Ansteuerung des Ruders als auch der Antriebseinheit ausgebildet sind.

Mittel zur Übermittlung der ermittelten bzw. gemessenen Größe von der Messeinrichtung zur Recheneinheit oder zur Steuereinrichtung können jede geeigneten Mittel umfassen. Insbesondere können dies Mittel zu einer kabelgebundenen oder zu einer drahtlosen Datenübertragung sein. Die Messeinrichtung wird zweckmäßigerweise direkt am Ruder vorgesehen sein, wobei sich die Recheneinheit oder die Steuerrichtung normalerweise außerhalb der Ruderanlage an Bord des Wasserfahrzeuges befindet. Insofern kann hier beispielsweise ein Kabel vom Ruder zur Recheneinheit oder zur Steuereinrichtung geführt werden und der Messeinrichtung ein entsprechender Sender und der Recheneinheit oder der Steuereinrichtung ein korrespondierender Empfänger zur Verfügung gestellt werden. Ebenso sind bei einer drahtlosen Übertragung zweckmäßigerweise geeignete Sender und Empfänger vorgesehen.

Die Funktion der beschriebenen Recheneinheit kann von der Steuereinrichtung des jeweiligen Systems übernommen werden kann. Alternativ kann die Recheneinheit auch separat innerhalb einer der beiden Systeme vorgesehen werden. Die Recheneinheit oder die Steuereinrichtung umfasst geeignete Algorithmen mit denen auf Basis eines oder mehrerer der ermittelten Werte der physikalischen Größe die auf das Ruder wirkenden Kräfte bestimmt bzw. berechnet werden können. Diese Kräfte sind die Auftriebskraft des Ruders und die Widerstandskraft des Ruders. Im vorliegenden Zusammenhang handelt es sich bei der Auftriebskraft insbesondere um die Kraft des dynamischen Auftriebs des Ruders. Im Allgemeinen entsteht eine derartige Kraft, wenn sich ein Körper (Ruder) mit einer bestimmten Form oder Stellung relativ zu einem Fluid (Wasser) bewegt. Die Kraft, die das Fluid bzw. die Flüssigkeit auf den Körper ausübt, wird üblicherweise in zwei Komponenten zerlegt: In den dynamischen Auftrieb, der quer zur Strömungsrichtung bzw. zur Wasserfahrzeuglängsachse wirkt und den Reibungswiderstand (Widerstandskraft), der längs der Strömungsrichtung bzw. Wasserfahrzeuglängsachse wirkt. In marine-technischen Fachkreisen werden die Begriffe "Auftriebskraft" und "Widerstandskraft" des Ruders häufig auch mit ihren englischen Begriffen "lift" und "drag" bezeichnet. Insbesondere die Größe der Auftriebskraft ist für die Ruderwirkung entscheidend. Die Auftriebskraft wird manchmal auch als "Seitenkraft" des Ruders bezeichnet.

Ist jeweils der aktuelle Betrag des Auftriebs- bzw. des Widerstands des Ruders bekannt, kann basierend hierauf von einem Autopilotsystem bzw. einem Dynamischen Positioniersystem die Ruderanlage bzw. die Antriebsanlage des Wasserfahrzeuges viel genauer angesteuert werden, um den gewünschten Kurs bzw. die gewünschte Position zu erreichen. Der Zusammenhang zwischen Auftrieb und Widerstand ist schematisch in Fig. 5 dargestellt, wobei U₀ die Propellerströmung eines Antriebspropellers eines Wasserfahrzeuges (hier nicht dargestellt) bezeichnet und mit 10 ein innerhalb dieser Strömung liegendes Ruder bezeichnet ist. Das Ruder ist unter einem Winkel α gegenüber der Wasserfahrzeuglängsrichtung 18 bzw. der Richtung der Strömung U₀ verdreht. Normalerweise sind die Wasserfahrzeuglängsrichtung 18 und die Strömungsrichtung identisch. Die hieraus resultierende, und senkrecht zur Strömungsrichtung bzw. Wasserfahrzeuglängsrichtung 18 verlaufende Auftriebskraft ist mit dem Pfeil 20 dargestellt, wohingegen die Widerstandskraft mit dem Pfeil 21 dargestellt ist und in Wasserfahrzeuglängsrichtung 18 verläuft. Die Pfeile 20, 21 sind als Vektoren dargestellt und zeigen sowohl Betrag als auch Richtung der jeweiligen Kraft an. Eine aus beiden vorgenannten Kräften resultierende Kraft ist mit dem Pfeil 22 dargestellt. Der in Fig. 5 dargestellte Zusammenhang ist insbesondere für Autopilotsysteme für Wasserfahrzeuge entscheidend, da diese im Wesentlichen nur das Ruder verstellen und normalerweise nicht auf die Antriebseinheit einwirken und somit hierfür die Höhe der Auftriebskraft des Ruders hauptsächlich entscheidend für die Berechnung des Ruderwinkels und die entsprechende Ansteuerung ist. Entsprechend kann bei Autopilotsystemen mit wesentlich weniger und geringeren Ruderausschlägen ausgekommen werden, wodurch die notwendige Vortriebsenergie des Wasserfahrzeuges erheblich eingespart werden kann.

Insbesondere ist es zweckmäßig, dass die mindestens eine Messeinrichtung zur Ermittlung der auf einen Ruderkoker und/oder einen Ruderschaft des Ruders wirkenden Biegespannung und/oder zur Ermittlung des auf den Ruderschaft des Ruders wirkenden Drehmomentes ausgebildet ist. Ein Ruderkoker kommt insbesondere bei Vollschweberudern zum Einsatz und besteht aus einem vom Wasserfahrzeugkörper in das Ruder hineingeführten Hohlträger, innerhalb dessen der Ruderschaft angeordnet und gelagert ist. Hierfür ist es ferner bevorzugt, dass die mindestens eine Messeinrichtung am Ruderkoker, insbesondere am Innenmantel des Ruderkokers, und/oder am Ruderschaft, insbesondere am Außenmantel des Ruderschaftes, angeordnet ist. Der Ruderkoker eines Vollschweberuders ist derart ausgelegt, dass er die auf das Ruder wirkende Biegespannung aufnimmt und in den Wasserfahrzeugkörper abführt. Insofern ist die Messung der Biegespannung dort besonders zweckmäßig. Die Messung des Drehmomentes am Ruderschaft ist ebenfalls zweckmäßig, da dieser die Drehachse des Ruders bildet.

Insbesondere ist es bevorzugt, dass die mindestens eine Messeinrichtung in einem oberen, dem Schiffskörper zugewandten Bereich des Ruderschaftes und/oder des Ruderkokers angeordnet ist. Bevorzugt ist die Messeinrichtung dabei in der oberen Hälfte, besonders bevorzugt im oberen Drittel des Ruderschaftes bzw. des Ruderkokers angeordnet. Dies ist insbesondere deshalb vorteilhaft, da in diesen Bereichen die Durchbiegung häufig am Größten ist und die vorgenannten Bereiche ferner am ehesten zugänglich für die Anbringung einer Messeinrichtung sind. Insbesondere befinden sich diese Bereiche häufig noch innerhalb des Schiffskörpers, so dass gegebenenfalls auch Kabel o. dgl. auf relativ einfache Art und Weise installiert werden können.

Um eine besonders hohe Redundanz der Messung zu erhalten bzw. um zwei physikalische Größen, insbesondere sowohl die Biegespannung als auch das Drehmoment, zu ermitteln, ist es zweckmäßig, zwei Messvorrichtungen vorzusehen, die bevorzugt jeweils am Ruderkoker und/oder am Ruderschaft vorgesehen sind. Ferner sind die beiden Messeinrichtungen bei dieser Ausführungsform bezogen auf den Umfang des zylindrischen Ruderkokers bzw. des Ruderschaftes um 80° bis 100°, insbesondere im Wesentlichen um 90°, versetzt zueinander angeordnet. Diese versetzte Anordnung der beiden Messeinrichtungen zueinander ist insbesondere in einer Querschnittsansicht erkennbar. Vorteilhaft ist hierbei, dass die Auftriebskraft und die Widerstandskraft des Ruders ebenfalls im Wesentlichen orthogonal zueinander wirken, so dass jeweils eine Messeinrichtung zur Ermittlung einer physikalischen Größe, die die Grundlage zur Bestimmung jeweils einer der vorgenannten Kräfte bildet, vorgesehen sein kann. Grundsätzlich kann jedoch auch eine Messung nur am Ruderschaft oder nur am Ruderkoker erfolgen.

Grundsätzlich kann die Messeinrichtung jede geeigneten, aus dem Stand der Technik bekannten Messmittel umfassen. Besonders bevorzugt umfasst die mindestens eine Messeinrichtung einen Dehnungsmessstreifen, optische Messmittel, und/oder Mittel zur Messung von Schwingungsfrequenzen. Hierdurch können auf einfache und kostengünstige Weise verlässliche Messergebnisse erhalten werden, auf deren Basis der Wert der physikalischen Größe ermittelt werden kann.

Die Lösung der der Erfindung zugrundeliegende Aufgabe gelingt ferner durch ein Verfahren zur dynamischen Positionierung und/oder zur automatischen Kurssteuerung eines Wasserfahrzeuges, insbesondere eines Schiffes, das folgende Schritte umfasst:
a.) Ermitteln eines Wertes mindestens einer physikalischen Größe eines Ruders, insbesondere Vollschweberuders, eines Wasserfahrzeuges, nämlich ein Drehmoment oder eine Biegespannung,
b.) Bestimmen von auf das Ruder wirkenden Kräften, nämlich der Auftriebskraft (20) und der Widerstandskraft (21), auf Basis des ermittelten Wertes der physikalischen Größe des Ruders (10),
c) Ansteuern eines Verstellmittels (16) zur Verstellung des Ruders (10), insbesondere einer Rudermaschine, und/oder einer Antriebseinheit (17) des Wasserfahrzeuges auf Basis der in Schritt b.) bestimmten Kräfte und gegebenenfalls weiterer Wasserfahrzeugpositionsdaten und/oder Wasserfahrzeugsmessdaten, und gegebenenfalls
d.) Wiederholen der Schritte a.) bis c.).

Ferner ist es zweckmäßig, dass zwei Messeinrichtungen jeweils am Ruderkoker und/oder jeweils am Ruderschaft vorgesehen sind, und dass auf Basis der Messwerte der einen Messeinrichtung die Auftriebskraft des Ruders und auf Basis der Messwerte der anderen Messeinrichtung die Widerstandskraft des Ruders ermittelt wird.

Messeinrichtung zur Ermittlung von Rudermessdaten einer physikalischen Größe des Ruders und die Steuereinrichtung zur Berücksichtigung der Rudermessdaten im Hinblick auf die Ansteuerung des Verstellmittels ausgebildet.

Bei beiden Systemen übermitteln Mittel zur Ermittlung von Wasserfahrzeugpositionsdaten diese an die Steuereinrichtung. Ebenso werden die Messdaten der mindestens einen Messeinrichtung an die Steuereinrichtung übermittelt. Die Messdaten können gemessene Werte der physikalischen Größe des Ruders oder auch aufgrund der eigentlich gemessenen Werte der Messeinrichtung ermittelte bzw. berechnete Werte sein. Erfindungsgemäß werden nun erstmals statt der üblichen, aus dem Stand der Technik bekannten Messdaten, Rudermessdaten einer auf das Ruder wirkenden physikalischen Größe verwendet. Diese Rudermessdaten werden ebenfalls an die Steuereinrichtung übermittelt und zur Bestimmung der automatischen Positionierung bzw. automatischen Kurssteuerung des Wasserfahrzeuges mit herangezogen, d.h., insbesondere auf Basis der Rudermessdaten wird von der Steuereinrichtung des Dynamischen Positionier- bzw. Autopilotsystems die Ansteuerung des Verstellmittels und/oder des Antriebspropellers vorgenommen. Somit kann durch die erfindungsgemäßen Systeme ein wesentlich genaueres Ansteuern der Manövrieranlage des Wasserfahrzeuges erfolgen und somit die Schalthysterese deutlich reduziert werden. Bei den erfindungsgemäßen Systemen werden somit erstmals Messdaten, die ausschließlich das Ruder betreffen, zur Positionierung bzw. Steuerung des Wasserfahrzeuges herangezogen.

Die physikalische Größe des Ruders ist vorzugsweise eine Biegespannung und/oder ein Drehmoment.

Ferner ist die Steuereinrichtung oder gegebenenfalls auch eine separate Recheneinheit zur Ermittlung einer auf das Ruder wirkenden Kraft, insbesondere der Auftriebskraft und/oder der Widerstandskraft, auf Basis der der ermittelten Werte der physikalischen Größe des Ruders ausgebildet. Die auf das Ruder wirkende Kraft wird dann für die Positionierung bzw. Kurssteuerung und insbesondere für die Ansteuerung der Manövrieranlage des Wasserfahrzeuges herangezogen.

Die mindestens eine Messeinrichtung der beiden Systeme kann gemäß einer der vorstehend beschriebenen Ausführungsformen der erfindungsgemäßen Anordnung zur Ermittlung einer auf ein Ruder wirkenden Kraft ausgebildet sein. Insbesondere kann die gesamte, vorgenannte erfindungsgemäße Anordnung Teil des Dynamischen Positionier- bzw. Autopilotsystems sein, wobei die Funktion der Recheneinheit aus der erfindungsgemäßen Anordnung von der Steuereinrichtung des jeweiligen Systems übernommen werden kann. Alternativ kann die Recheneinheit auch separat innerhalb einer der beiden Systeme vorgesehen werden.

In einer bevorzugten Ausführungsform der Systeme ist eine weitere Messeinrichtung vorgesehen, die zur Ermittlung von Wasserfahrzeugantriebsmessdaten in Bezug auf die Antriebskraft des Wasserfahrzeuges, insbesondere den Schub des Wasserfahrzeuges, ausgebildet ist. Diese ist bevorzugt an der Antriebswelle des Antriebspropellers des Wasserfahrzeuges vorgesehen. Ferner ist die Steuereinrichtung zur Berücksichtigung der Wasserfahrzeugantriebsmessdaten im Hinblick auf die Ansteuerung des Verstellmittels und/oder des Antriebspropellers ausgebildet. Somit werden bei dieser Ausführungsform zusätzlich zu den Rudermessdaten die Wasserfahrzeugantriebsmessdaten bei der Ansteuerung der Manövrieranlage des Wasserfahrzeuges herangezogen, bzw. in den der Ansteuerung zugrundeliegenden Algorithmus mit eingebracht. Dies ist insbesondere deswegen zweckmäßig, weil der Schub des Wasserfahrzeuges genau entgegen der Widerstandskraft des Ruders wirkt bzw. um die Widerstandskraft des Ruders vermindert wird. Insofern ist es bei der zusätzlichen Vorsehung der Wasserfahrzeugantriebsmessdaten möglich, weitergehende Informationen über die Manövrieranlage des Wasserfahrzeuges zu erhalten. Insbesondere kann die Steuereinrichtung auf Basis dieser Daten die Nettomanövrierkraft ("net maneuvering force") ermitteln bzw. berechnen und diese für den Prozess der Ansteuerung der Manövrieranlage mit heranziehen. Der Zusammenhang zwischen diesen einzelnen Kräften wird durch die Darstellung in Fig. 6 verdeutlicht. Diese Darstellung basiert auf der Darstellung von Fig. 5, wobei zusätzlich der dem Widerstand 21 entgegenwirkende Schub 23 als Vektorpfeil eingezeichnet ist. Aus dem Nettoschub 23b (= Schub - Widerstand) und dem Auftrieb 20 kann als resultierende Kraft die Nettomanövrierkraft 24 ermittelt werden. Der in Fig. 5 dargestellte Zusammenhang ist insbesondere bei Dynamischen Positioniersystemen relevant, da diese häufig sowohl zur Ansteuerung des Ruders als auch der Antriebseinheit ausgebildet sind.

Die Wasserfahrzeugmessdaten sind hierbei Messdaten bezüglich anderweitiger auf das Wasserfahrzeug wirkender physikalischen Größen, beispielsweise Windstärke, Wellengang, etc. Zweckmäßigerweise werden die einzelnen Verfahrensschritte während der Fahrt des Wasserfahrzeuges ständig wiederholt. Somit wird auch die auf das Ruder wirkende Kraft kontinuierlich und in sich wiederholender Art und Weise ermittelt, was zu qualitativ hochwertigen Ergebnissen in Bezug auf eine optimale Positionierung bzw. Kursausrichtung des Wasserfahrzeuges führt. Insbesondere kann das Verfahren mit einem erfindungsgemäßen, vorstehend beschriebenen Dynamischen Positionier- bzw. Autopilotsystem durchgeführt werden.

In einer bevorzugten Ausführungsform des erfindungsgemäßen Verfahrens kann ferner die Antriebskraft des Wasserfahrzeuges, insbesondere der Schub, ermittelt werden. In diesem Zusammenhang ist es dann zweckmäßig, sowohl die Auftriebskraft als auch die Widerstandskraft zu ermitteln und auf Basis der vorgenannten drei Kräfte eine Wasserfahrzeugmanövrierkraft bzw. eine Nettomanövrierkraft des Wasserfahrzeuges zu bestimmen, wobei das Ansteuern in Schritt c.) auf Basis der Wasserfahrzeugmanövrierkraft erfolgt. Hierdurch kann die Schalthysterese weiter reduziert werden.

Schließlich kann die der Erfindung zugrundeliegende Aufgabe durch ein Computerprogrammprodukt, das ein computerlesbares Speichermedium umfasst bzw. ein solches computerlesbares Speichermedium selbst gelöst werden, wobei auf dem Speichermedium ein Programm gespeichert ist, dass es einem Computer ermöglicht, nachdem es in den Speicher des Computers geladen worden ist, ein vorstehenden beschriebenes Verfahren, gegebenenfalls im Zusammenspiel mit einem vorbeschriebenen System, durchzuführen.

Nachfolgend wird die Erfindung anhand der Zeichnung näher erläutert. Es zeigen schematisch:
- Fig. 1: eine teilweise geschnittene Seitenansicht eines Ruders mit Messeinrichtungen zur Ermittlung eines Drehmomentes und einer Biegespannung,
- Fig. 2: eine Schnittansicht eines Teilbereiches eines Ruderkokers und eines Ruderschaftes eines Ruders mit Messeinrichtungen für Drehmoment und Biegespannung,
- Fig. 3: eine schematische Darstellung eines Dynamischen Positioniersystems,
- Fig. 4: eine schematische Darstellung eines Autopilotsystems,
- Fig. 5: Kraftvektordarstellung zur Verdeutlichung des Zusammenhanges zwischen Auftrieb und Widerstand, und
- Fig. 6: Kraftvektordarstellung aus Fig. 5 mit zusätzlich eingezeichneter Schub- und Nettomanövrierkraft.

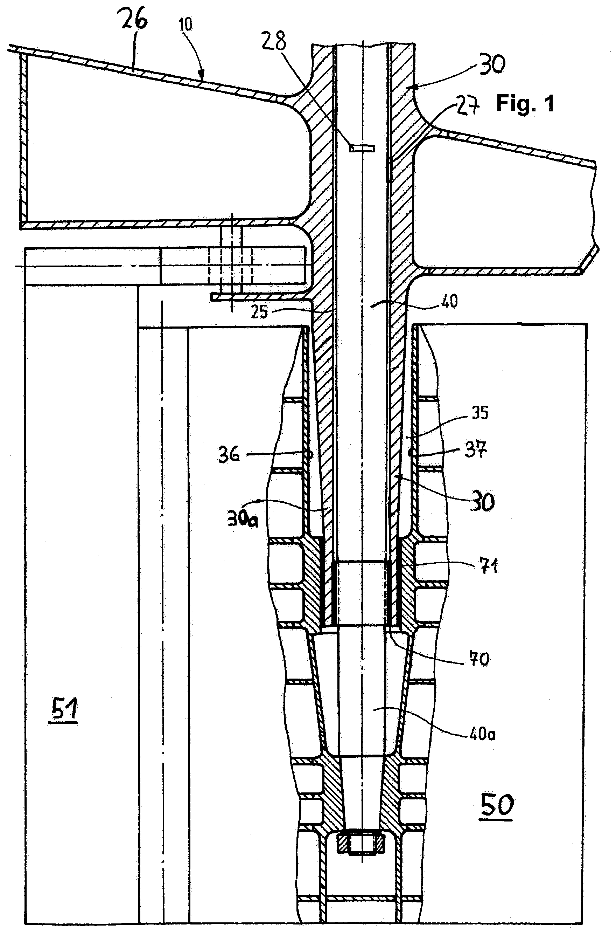

Fig. 1 zeigt die Seitenansicht eines Ruders 10, das einen Ruderkoker 30, einen Ruderschaft 40 und ein Ruderblatt 50 mit anlenkbarer Flosse 51 umfasst. Der Koker 30, der Schaft 40 sowie einige Teilbereiche des Ruderblattes 50 sind in einer Schnittdarstellung dargestellt. Der Ruderkoker 30 ist in seinem oberen Bereich fest mit dem Schiffskörper 26 verbunden. Der Ruderkoker 30 weist ferner eine Innenbohrung 25 auf, die den Ruderschaft 40 aufnimmt. Der Ruderkoker 30 ist vorzugsweise in eine zylindrische Einziehung 35 im Ruderblatt 50 eingeführt, die das freie Ende 30a des Ruderkokers 30 aufnimmt. Die Einziehung 35 wird durch eine seitliche Beplankung 36, 37 des Ruderblattes 50 begrenzt. Der Ruderschaft 40 ist mit seinem vom Ruderkoker 30 vorstehenden und in das Ruderblatt 50 hineinragenden Endbereich 40a mit dem Ruderblatt 50 verbunden. Ferner sind Lager 70, 71 zur Lagerung des Schaftes 40 im Ruderkoker 30 bzw. zur Lagerung des Ruderkokers 30 im Ruderblatt 50 vorgesehen. Auf der Oberfläche des Ruderschaftes 40 ist in einem oberen Bereich des Ruderschaftes 40, der innerhalb des Schiffskörpers 26 und noch nicht im Ruderblatt 50 angeordnet ist, eine Messeinrichtung 28 vorgesehen. Die Messeinrichtung 28 ist fest auf der Oberfläche des Schaftes 40 montiert. Diese Messeinrichtung 28 umfasst Dehnungsmessstreifen. Eine weitere Messeinrichtung 27 ist am Innenmantel bzw. auf der Innenseite des Ruderkokers 30 im oberen Bereich des Ruderkokers 30 und in der Nähe zur Messeinrichtung 28 angeordnet. Eine derartige Anordnung der Messeinrichtung 27, 28 hat den Vorteil, dass diese noch innerhalb des Schiffskörpers 26 angeordnet und somit relativ gut zugänglich sind und entsprechend hier auch Kabel o. dgl. relativ unkompliziert zu den Messeinrichtungen hingeführt werden können. Ferner sind die Messeinrichtungen 27, 28 im Bereich der größten Durchbiegung des Ruderschaftes 40 bzw. des Ruderkokers 30 angeordnet, so dass hier optimale Messergebnisse erzielt werden können. Grundsätzlich könnte die Messeinrichtung 27 auch auf dem Außenmantel des Ruderkokers 30 angeordnet sein. Die Messeinrichtung 27 umfasst ebenfalls einen Dehnungsmessstreifen. Die Messeinrichtung 28 ist zur Messung bzw. Ermittlung des Drehmomentes im Ruderschaft 40 ausgebildet, während mittels der Messeinrichtung 27 die im Ruderkoker 30 vorherrschende Biegespannung ermittelt werden kann. Die gemessenen bzw. ermittelten Werte werden von beiden Messeinrichtungen 27, 28 an eine Recheneinheit (hier nicht dargestellt) übertragen. Hierfür sind in jeder Messeinrichtung 27, 28 integriert Übermittlungs- bzw. Sendemittel (hier nicht dargestellt) vorgesehen, die für eine drahtlose Übertragung der Daten geeignet sind.

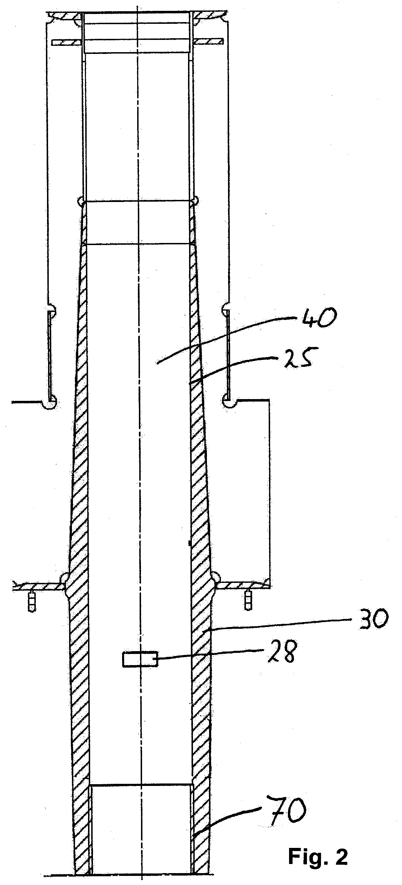

Fig. 2 zeigt einen Teilbereich eines Kokers 30 eines darin gelagerten Ruderschaftes 40 eines Ruders. Bei dieser Darstellung ist ebenfalls auf der Oberfläche des Ruderschaftes eine Messeinrichtung 28 zur Ermittlung des Drehmomentes und/oder der Biegespannung des Ruderschaftes 40 vorgesehen. Eine weitere Messeinrichtung ist nicht vorgesehen. Somit erfolgt die Ermittlung der auf das Ruder wirkenden Kräfte bei der Ausführung gemäß Fig. 2 einzig durch eine am Ruderschaft 40 vorgesehene Messeinrichtung, die normalerweise entweder zur Ermittlung des Drehmomentes oder der Biegespannung ausgebildet ist. Die Messeinrichtung 28 verfügt ebenfalls über Sende- bzw. Übermittlungsmittel zur Übermittlung der Daten an eine Recheneinheit (hier nicht dargestellt).

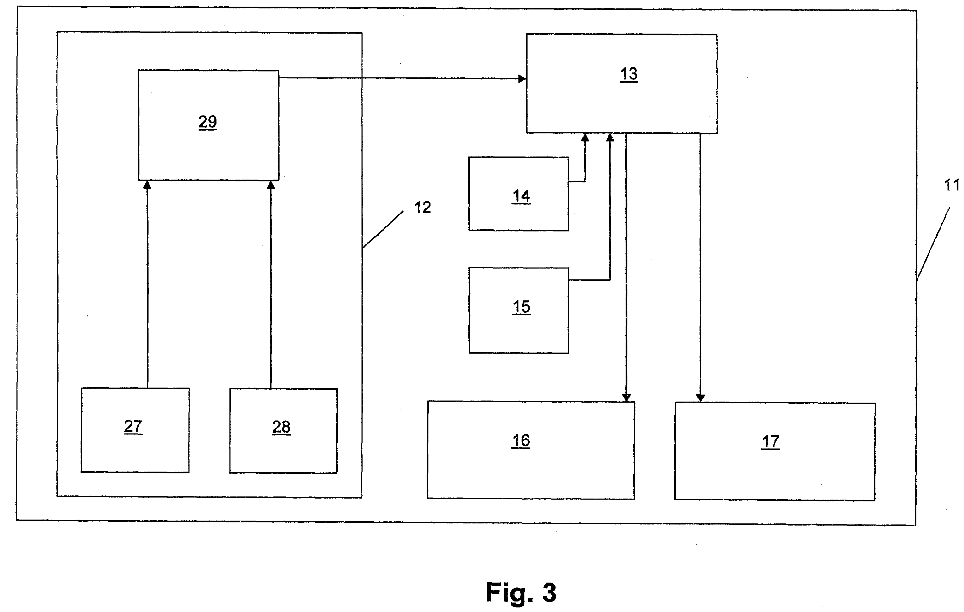

Fig. 3 zeigt eine schematische Darstellung eines Dynamischen Positioniersystems 11. Dieses System 11 umfasst eine Anordnung 12 zur Ermittlung einer auf ein Ruder wirkenden Kraft. Die Messeinrichtungen 27, 28 ermitteln eine Biegespannung bzw. einen Drehmoment am Ruder. Die gemessenen bzw. ermittelten Daten werden von den Messeinrichtungen 27, 28 an eine Recheneinheit 29 übermittelt, die sich an Bord eines Schiffes (hier nicht dargestellt) befindet. Die Recheneinheit 29 errechnet auf Basis der ermittelten Werte für die Biegespannung und das Drehmoment eine Auftriebskraft 20 und/oder eine Widerstandskraft 21 des Ruders 10 und übermittelt die Werte für diese Kraft an eine Steuereinrichtung 13 des Dynamischen Positioniersystems 11. Grundsätzlich kann die Recheneinheit 29 auch in einen vorgelagerten Schritt auf Basis der Messwerte zunächst das Drehmoment bzw. die Biegespannung ermitteln. Weiterhin erhält die Steuereinrichtung 13 Wasserfahrzeugpositionsdaten von einem als GPS-Empfänger ausgebildeten Mittel zur Ermittlung von Wasserfahrzeugpositionsdaten 14 sowie Daten von einer Windmesseinrichtung 15 über die Windstärke in der Umgebung des Wasserfahrzeuges. Gegebenfalls können hier noch weitere Messeinrichtungen bzw. Mittel zur Ermittlung von Wasserfahrzeugpositionsdaten mit der Steuereinrichtung 13 verbunden werden. Basierend auf den an die Steuereinrichtung 13 übermittelten Werten bzw. Parametern ermittelt bzw. errechnet die Steuereinrichtung 13 auf Basis von in der Steuereinrichtung 13 gespeicherten bzw. vorgegebenen Algorithmen, welche Ruderwinkel bzw. welche Antriebskraft optimal zur Erreichung bzw. Beibehaltung der gewünschten Positionen, die ebenfalls in der Steuereinrichtung 13 gespeichert sind, ist. Bei diesem Berechnungsschritt wird erfindungsgemäß auch die Auftriebskraft 20 und/oder die Widerstandskraft 21 berücksichtigt. Basierend auf den ermittelten Ruderwinkeln bzw. der ermittelten Leistungshöhe steuert die Steuereinrichtung 13 eine Verstelleinrichtung 16 zur Verstellung des Ruderwinkels und/oder eine Wasserfahrzeugantriebseinheit 17 zur Erhöhung bzw. Erniedrigung des Schubs des Wasserfahrzeuges an. Der vorstehend beschriebene Vorgang wird während der Betriebes des Wasserfahrzeuges ständig wiederholt, um sicherzustellen, dass das Wasserfahrzeug fortwährend auf der gewünschten Position verbleibt.

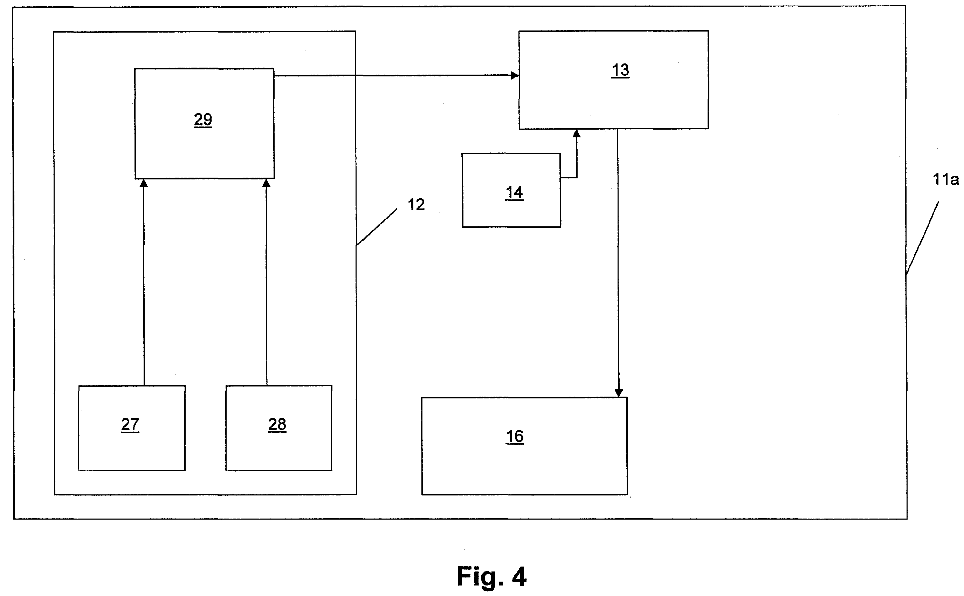

Fig. 4 zeigt eine schematische Darstellung eines Autopilotsystems 11a. Diese Darstellung bzw. das Autopilotsystem 11a entspricht im Wesentlichen dem in Fig. 3 dargestellten Dynamischen Positioniersystem 11. Im Unterschied zum Dynamischen Positioniersystem 11 steuert die Steuereinrichtung 13 des Autopilotsystems 11a nur die Verstellmittel 16 zur Verstellung des Ruderwinkels an und nicht auch noch eine Wasserantriebseinheit. Darüber hinaus ist auch keine Windmesseinrichtung o. dgl. vorgesehen, da derartige Parameter bei Fahrt des Wasserfahrzeugs für die Kurssteuerung nur eine untergeordnete Rolle spielen.

### Bezugszeichenliste

- 10: Ruder
- 11: Dynamisches Positioniersystem
- 11a: Autopilotsystem
- 12: Anordnung
- 13: Steuereinrichtung
- 14: Mittel zur Ermittlung von Wasserfahrzeugpositionsdaten
- 15: Windmesseinrichtung
- 16: Ruderverstelleinrichtung
- 17: Wasserfahrzeugantriebseinheit
- 18: Wasserfahrzeuglängsrichtung

- 20: Auftriebskraft
- 21: Widerstandskraft
- 22: Resultierende Kraft
- 23: Schub
- 23b: Nettoschub
- 24: Nettomanövrierkraft
- 25: Innenbohrung
- 26: Schiffskörper
- 27: Messeinrichtung / Koker
- 28: Messeinrichtung / Schaft
- 29: Recheneinheit

- 30: Ruderkoker
- 30a: unteres Ruderkokerende
- 35: Einziehung
- 36: Beplankung
- 37: Beplankung

- 40: Ruderschaft

- 50: Ruderblatt
- 51: Flosse

- 70: Lager
- 71: Lager

- U₀: Propellerströmung
- α: Ruderwinkel

## Patentansprüche

1. Dynamisches Positioniersystem (11) zur automatischen Positionierung eines Wasserfahrzeuges, insbesondere Schiff, mit einem Ruder (10), insbesondere Vollschweberuder, einem Verstellmittel (16), insbesondere einer Rudermaschine, zur Verstellung des Ruders (10) und einer Antriebseinheit (17), insbesondere ein Antriebspropeller, umfassend eine Steuereinrichtung (13) zur Ansteuerung des Verstellmittels (16) und/oder der Antriebseinheit (17), Mittel (14) zur Ermittlung von Wasserfahrzeugpositionsdaten, die zur Übermittlung der Wasserfahrzeugpositionsdaten an die Steuereinrichtung (13) ausgebildet sind, und mindestens eine Messeinrichtung zur Ermittlung von Messdaten von auf das Wasserfahrzeug wirkenden physikalischen Größen, wobei die mindestens eine Messeinrichtung zur Übermittlung der ermittelten Messdaten an die Steuereinrichtung (13) ausgebildet ist, wobei die Steuereinrichtung (13) zur Ansteuerung des Verstellmittels (16) und/oder der Antriebseinheit (17) auf Basis der Wasserfahrzeugpositionsdaten und der Messdaten ausgebildet ist,
wobei die mindestens eine Messeinrichtung (27, 28) am Ruder (10) angeordnet ist und zur Ermittlung von Rudermessdaten einer auf das Ruder (10) wirkenden physikalischen Größe, insbesondere eine Biegespannung und/oder ein Drehmoment, ausgebildet ist, wobei die Steuereinrichtung (13) zur Ermittlung von auf das Ruder (10) wirkenden Kräften, nämlich der Auftriebskraft (20) und der Widerstandskraft (21), auf Basis der Rudermessdaten der auf das Ruder (10) wirkenden physikalischen Größe ausgebildet ist, und wobei die Steuereinrichtung (13) zur Berücksichtigung der Rudermessdaten im Hinblick auf die Ansteuerung des Verstellmittels (16) und/oder der Antriebseinheit (17) ausgebildet ist.

2. Autopilotsystem (11a) zur automatischen Kurssteuerung eines Wasserfahrzeuges, insbesondere Schiff, mit einem Ruder (10), insbesondere Vollschweberuder, und einem Verstellmittel (16), insbesondere eine Rudermaschine, zur Verstellung des Ruders, umfassend eine Steuereinrichtung (13) zur Ansteuerung des Verstellmittels (16), Mittel (14) zur Ermittlung von Wasserfahrzeugpositionsdaten, die zur Übermittlung der Wasserfahrzeugpositionsdaten an die Steuereinrichtung (13) ausgebildet sind, und mindestens eine Messeinrichtung zur Ermittlung von Messdaten von auf das Wasserfahrzeug wirkenden physikalischen Größen, wobei die mindestens eine Messeinrichtung zur Übermittlung der ermittelten Messdaten an die Steuereinrichtung (13) ausgebildet ist, wobei die Steuereinrichtung (13) zur Ansteuerung des Verstellmittels (16) auf Basis der Wasserfahrzeugpositionsdaten und der Messdaten ausgebildet ist, **dadurch gekennzeichnet, dass** die mindestens eine Messeinrichtung (27, 28) am Ruder (10) angeordnet ist und zur Ermittlung von Rudermessdaten einer auf das Ruder (10) wirkenden physikalischen Größe, insbesondere eine Biegespannung und/oder ein Drehmoment, ausgebildet ist, dass die Steuereinrichtung (13) zur Ermittlung von auf das Ruder (10) wirkenden Kräften, nämlich der Auftriebskraft (20) und der Widerstandskraft (21), auf Basis der Rudermessdaten der auf das Ruder (10) wirkenden physikalischen Größe ausgebildet ist, und dass die Steuereinrichtung (13) zur Berücksichtigung der Rudermessdaten im Hinblick auf die Ansteuerung des Verstellmittels (16) ausgebildet ist.

3. System gemäß einem der vorhergehenden Ansprüche,
**dadurch gekennzeichnet,**
**dass** eine weitere Messeinrichtung vorgesehen ist, die zur Ermittlung von Wasserfahrzeugantriebsmessdaten in Bezug auf die Antriebskraft des Wasserfahrzeuges, insbesondere den Schub (23), ausgebildet ist und die bevorzugt an der Antriebseinheit (17), insbesondere an der Antriebswelle des Antriebspropellers, vorgesehen ist, wobei die Steuereinrichtung (13) zur Berücksichtung der Wasserfahrzeugantriebsmessdaten im Hinblick auf die Ansteuerung des Verstellmittels (16) und/oder der Antriebseinheit (17) ausgebildet ist.

4. Verfahren zur dynamischen Positionierung und/oder zur automatischen Kurssteuerung eines Wasserfahrzeuges, insbesondere eines Schiffes, umfassend folgende Schritte:
a.) Ermitteln eines Wertes mindestens einer physikalischen Größe eines Ruders, insbesondere Vollschweberuders, eines Wasserfahrzeuges, nämlich ein Drehmoment oder eine Biegespannung,
b.) Bestimmen von auf das Ruder wirkenden Kräften, nämlich der Auftriebskraft (20) und der Widerstandskraft (21), auf Basis des ermittelten Wertes der physikalischen Größe des Ruders (10),
c) Ansteuern eines Verstellmittels (16) zur Verstellung des Ruders (10), insbesondere einer Rudermaschine, und/oder einer Antriebseinheit (17) des Wasserfahrzeuges auf Basis der in Schritt b.) bestimmten Kräfte und gegebenenfalls weiterer Wasserfahrzeugpositionsdaten und/oder Wasserfahrzeugsmessdaten, und gegebenenfalls
d.) Wiederholen der Schritte a.) bis c.).

5. Verfahren gemäß Anspruch 4,
**dadurch gekennzeichnet,**
**dass** die Antriebskraft des Wasserfahrzeuges, insbesondere der Schub (23), ermittelt wird, dass in Schritt b). die Auftriebskraft (20) und die Widerstandskraft (21) ermittelt werden, und dass auf Basis der vorgenannten Kräfte eine Wasserfahrzeugmanövrierkraft (24) bestimmt wird, wobei das Ansteuern in Schritt c.) auf Basis der bestimmten Wasserfahrzeugmanövrierkraft (24) erfolgt.

6. Verfahren gemäß Anspruch 4 oder 5,
**dadurch gekennzeichnet,**
**dass** während des Betriebs des Wasserfahrzeuges die auf das Ruder (10) wirkende Kraft kontinuierlich ermittelt wird.

7. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren gemäß einem der Ansprüche 4 bis 6, gegebenenfalls im Zusammenspiel mit einem System (11, 11a) gemäß einem der Ansprüche 1 bis 3, durchzuführen.

8. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 4 bis 6, gegebenenfalls im Zusammenspiel mit einem System (11, 11a) gemäß einem der Ansprüche 1 bis 3, durchzuführen.

## Claims

1. A dynamic positioning system (11) for automatic positioning of a watercraft, in particular a ship, having a rudder (10), in particular a full spade rudder, an adjusting means (16), in particular a rudder engine for adjusting the rudder (10) and a propulsion unit (17), in particular a propulsion propeller, comprising a control device (13) for controlling the adjusting means (16) and/or the propulsion unit (17), means (14) for determining watercraft position data configured for transmitting watercraft position data to the control device (13), and at least one measuring device for determining measurement data of physical quantities acting on the watercraft, wherein the at least one measuring device is configured for transmitting the determined measurement data to the control device (13), wherein the control device (13) is configured for controlling the adjusting means (16) and/or the propulsion unit (17) based on the watercraft position data and the measurement data,
wherein the at least one measuring device (27, 28) is arranged at the rudder (10) and is configured for determining rudder measurement data of a physical quantity acting on the rudder (10), in particular of a bending stress and/or a torque, wherein the control device (13) is configured for determining forces acting on the rudder (10), namely buoyancy (20) and resistability (21), based on the rudder measurement data of the physical quantity acting on the rudder (10), and wherein the control device (13) is configured for taking into account the rudder measurement data in regard to the controlling of the adjusting means (16) and/or the propulsion unit (17).

2. An autopilot system (11a) for automatic course control of a watercraft, in particular a ship, having a rudder (10), in particular a full spade rudder, and an adjusting means (16), in particular a rudder engine for adjusting the rudder comprising a control device (13) for controlling the adjusting means (16), means (14) for determining watercraft position data configured for transmitting watercraft position data to the control device (13), and at least one measuring device for determining measurement data of physical quantities acting on the watercraft, wherein the at least one measuring device is configured for transmitting the determined measurement data to the control device (13), wherein the control device (13) is configured for controlling the adjusting means (16) and/or the propulsion unit (17) based on the watercraft position data and the measurement data,
**characterized in that** the at least one measuring device (27, 28) is arranged at the rudder (10) and is configured for determining rudder measurement data of a physical quantity acting on the rudder (10), in particular of a bending stress and/or a torque, that the control device (13) is configured for determining forces acting on the rudder (10), namely buoyancy (20) and resistability (21), based on the rudder measurement data of the physical quantity acting on the rudder (10), and that the control device (13) is configured for taking into account the rudder measurement data in regard to the controlling of the adjusting means (16)

3. The system according to one of the preceding claims,
**characterized in that**
a further measuring device is provided, which is configured for determining watercraft propulsion measurement data in relation to a propulsion force of the watercraft, in particular the thrust (23), and which is preferably provided on the propulsion unit (17), in particular on a drive shaft of the propulsion propeller, wherein the control device (13) is configured for taking into account the watercraft propulsion measurement data in regard to the controlling of the adjusting means (16) or the propulsion unit (17).

4. A method for dynamic positioning and/or for automatic course control of a watercraft, in particular a ship, comprising the following steps:
a) determining a value of at least one physical quantity of a rudder, in particular a full spade rudder, of a watercraft, namely a torque or a bending stress;
b) determining of forces acting on the rudder, namely the buoyancy (20) and resistability (21), based on the determined value of the physical quantity of the rudder;
c) controlling an adjusting means (16) for adjusting the rudder (10), in particular a rudder engine and/or a propulsion unit (17) of the watercraft based on the forces determined in step b) and, optionally, further watercraft position data and/or watercraft measurement data, and optionally
d) repeating steps a) to c).

5. The method according to claim 4,
**characterized in that** the propulsion force of the watercraft, in particular the thrust (23), is determined, that the buoyancy (20) and resistability (21) are determined in step b), and that a watercraft maneuvering force (24) is determined based on the aforesaid forces, wherein the controlling in step c) is carried out based on the determined watercraft maneuvering force (24).

6. The method according to claim 4 or 5,
**characterized in that** during operation of the watercraft the force acting on the rudder (10) is determined continuously.

7. A computer program product comprising a computer-readable storage medium on which a program is stored, which, after being loaded into a memory of a computer, enables the computer to carry out a method according to claims 4 to 6, optionally in combination with a system (11, 11a) according to one of claims 1 to 3.

8. A computer-readable storage medium, on which a program is stored which, after having been loaded into the memory of the computer, enables a computer to carry out a method according to one of claims 4 to 6, optionally in combination with a system (11, 11a) according to one of claims 1 to 3.

## Revendications

1. Système de positionnement dynamique (11) pour le positionnement automatique d'un engin nautique, notamment un navire, comportant un gouvernail (10), notamment un gouvernail compensé, un moyen d'ajustage (16), notamment un appareil à gouverner, pour ajuster le gouvernail (10) et une unité d'entrainement (17), notamment une hélice de propulsion, comprenant un dispositif de commande (13) pour commander le moyen d'ajustage (16) et/ou l'unité d'entraînement (17), un moyen (14) pour déterminer les données de position d'engin nautique, qui sont conçus afin de déterminer les données de position d'engin nautique sur le dispositif de commande (13), et au moins un dispositif de mesure pour déterminer des données de mesure de grandeurs physiques agissant sur l'engin nautique, dans lequel au moins un système de mesure est conçu afin de déterminer les données de mesure déterminées sur le dispositif de commande (13), dans lequel le dispositif de commande (13) est conçu afin de commander le moyen d'ajustage (16) et/ou l'unité d'entraînement (17) sur la base des données de position d'engin nautique et des données de mesure,
dans lequel au moins un dispositif de mesure (27, 28) est disposé sur le gouvernail (10) et est conçu afin de déterminer des données de mesure de gouvernail d'une grandeur physique agissant sur le gouvernail (10), notamment une contrainte de flexion et/ou un couple de rotation, dans lequel le dispositif de commande (13) est conçu afin de déterminer des forces agissant sur le gouvernail (10), à savoir la flottabilité (20) et la force de résistance (21), sur la base des données de mesure de gouvernail de la grandeur physique agissant sur le gouvernail (10), et dans lequel le dispositif de commande (13) est conçu afin de prendre en compte les données de mesure de gouvernail en ce qui concerne la commande du moyen d'ajustage (16) et/ou de l'unité d'entraînement (17).

2. Système de pilote automatique (11a) pour le pilotage automatique d'un engin nautique, notamment un navire, comportant un gouvernail (10), notamment un gouvernail compensé, et un moyen d'ajustage (16), notamment un appareil à gouverner, pour ajuster le gouvernail (10), comprenant un dispositif de commande (13) pour commander le moyen d'ajustage (16), un moyen (14) pour déterminer les données de position d'engin nautique, qui sont conçus afin de déterminer les données de position d'engin nautique sur le dispositif de commande (13), et au moins un dispositif de mesure pour déterminer des données de mesure de grandeurs physiques agissant sur l'engin nautique, dans lequel au moins un système de mesure est conçu afin de déterminer les données de mesure déterminées sur le dispositif de commande (13), dans lequel le dispositif de commande (13) est conçu afin de commander le moyen d'ajustage (16) sur la base des données de position d'engin nautique et des données de mesure,
**caractérisé en ce qu'**au moins un dispositif de mesure (27, 28) est disposé sur le gouvernail (10) et est conçu afin de déterminer des données de mesure de gouvernail d'une grandeur physique agissant sur le gouvernail (10), notamment une contrainte de flexion et/ou un couple de rotation, **en ce que** le dispositif de commande (13) est conçu afin de déterminer des forces agissant sur le gouvernail (10), à savoir la flottabilité (20) et la force de résistance (21), sur la base des données de mesure de gouvernail de la grandeur physique agissant sur le gouvernail (10), et **en ce que** le dispositif de commande (13) est conçu afin de prendre en compte les données de mesure de gouvernail en ce qui concerne la commande du moyen d'ajustage (16).

3. Système selon une des revendications précédentes,
**caractérisé en ce**
**qu'**un dispositif de mesure supplémentaire est prévu, qui est conçu afin de déterminer des données de mesure d'entraînement d'engin nautique relativement à la force d'entraînement de l'engin nautique, notamment la poussée (23), et qui est prévu de préférence sur l'unité d'entraînement (17), notamment sur l'arbre d'entraînement de l'hélice de propulsion, dans lequel le dispositif de commande (13) est conçu afin de prendre en compte les données d'entraînement d'engin nautique en ce qui concerne la commande du moyen d'ajustage (16) et/ou de l'unité d'entraînement (17).

4. Procédé de positionnement dynamique et/ou de pilotage automatique d'un engin nautique, notamment d'un navire, comprenant les étapes suivantes consistant à :
a.) déterminer une valeur d'au moins une grandeur physique d'un gouvernail, notamment un gouvernail compensé, d'un engin nautique, à savoir un couple de rotation ou une contrainte de flexion,
b.) déterminer des forces agissant sur le gouvernail, à savoir la flottabilité (20) et la fore de résistance (21) sur la base de la valeur déterminée de la grandeur physique du gouvernail (10),
c.) commander un moyen d'ajustage (16) pour ajuster le gouvernail (10), notamment un appareil à gouverner, et/ou une unité d'entraînement (17) de l'engin nautique sur la base des forces déterminées à l'étape b.) et le cas échéant de données de position d'engin nautique supplémentaires et/ou des données de mesure d'engin nautique, et le cas échéant
d.) répéter les étapes a.) à c.).

5. Procédé selon la revendication 4,
caractérisé en en
que la force d'entraînement de l'engin nautique, notamment la poussée (23) est déterminée, en déterminant à l'étape b.) la flottabilité (20) et la force de résistance (21) et en déterminant sur la base des forces précédemment mentionnées une force de manoeuvre d'engin nautique (24), dans lequel la commande est effectuée à l'étape c.) sur la base de la force de manoeuvre d'engin nautique (24) déterminée.

6. Procédé selon la revendication 4 ou 5,
**caractérisé en ce**
**que** pendant le fonctionnement de l'engin nautique la force agissant sur le gouvernail (10) est déterminée en continu.

7. Produit de programme informatique, qui comprend un support de mémorisation lisible par ordinateur, sur lequel un programme est mémorisé, qui permet à un ordinateur, après qu'il a été chargé dans la mémoire de l'ordinateur, de mettre en ouvre un procédé selon une des revendications 4 à 6, le cas échéant en interaction avec un système (11, 11a) selon une des revendications 1 à 3.

8. Support de mémorisation lisible par ordinateur, sur lequel un programme est mémorisé, qui permet à un ordinateur, après qu'il a été chargé dans la mémoire de l'ordinateur, de mettre en oeuvre un procédé selon une des revendications 4 à 6, le cas échéant en interaction avec un système (11, 11a) selon une des revendications 1 à 3.
